# EUROPEAN PATENT SPECIFICATION

(11) **EP 0 694 256 B1**
(45) Date of publication and mention of the grant of the patent: **18.06.1997**
(21) Application number: 95305187.7
(22) Date of filing: 25.07.1995
(51) Int. Cl.: A01K 31/07

(54) **Bird transporter**
Geflügeltransportbehälter
Cage de transport pour oiseaux

(30) Priority: 28.07.1994 GB 9415243
(43) Date of publication of application: 31.01.1996
(73) Proprietor: STEVEN CHARLES FROST, PHILIP PAUL FROST, JACK CECIL FROST and ROSANNA IDA FROST trading as J.C. FROST & COMPANY, Attleborough, Norfolk NR17 2LD (GB)
(72) Inventor: Frost, Steven Charles, Attleborough, Norfolk NR17 1PH (GB)
(74) Representative: Stone, Patrick

(56) References cited:
- CH-A- 667 774
- GB-A- 395 397
- GB-A- 2 210 102
- US-A- 2 619 250
- US-A- 3 695 233
- US-A- 4 130 088

## Description

This invention relates generally to bird transporters and in particular to a cage for the transport of live birds, more especially but not exclusively turkeys.

Various kinds of bird transporting cages and modular cage systems exist on the market.

Simple cages comprise a base which enables the cage to be engaged and lifted by the arms of a fork lift truck, and, above the base, a box-like structure of mesh construction, with side walls, end walls and top wall. Typically one side wall is openable, sometimes with an up-and-over movement, to enable birds to be loaded into the cage, which is usually about one third of a metre (14 inches) deep. The cage is typically about 1.5 metres (5 feet) by 2.5 metres (8 feet) in plan dimensions, so that a stack of cages five or six cages long and four or five cages high can be formed on the bed of a typical flat bed lorry. Loading the cages involves awkward manhandling of the birds, which in the case of live turkeys can be of substantial weight. Side loading necessarily involves throwing the first few birds to the back of the cage, and progressively throwing the birds a lesser distance as the cage is progressively filled.

Box-like cages generally as above described, but with a top wall constituted by an openable lid mounted at one side or end, are known from U.S. Patents No. 3695233 and No. 4130088.

Modular systems basically consist of a stack of cages, sometimes permanently fixed on the lorry or sometimes trolley mounted. Loading may be by way of an openable side of each cage or, in some instances, the individual cages are arranged as open topped drawers enabling the birds to be dropped in from above. The latter method is not particularly advantageous in the case of the upper cages in the stack, as the heavy birds have to be lifted to a high level in order to be able to drop them into the cages, especially so in the case of a lorry mounted stack.

It is a principal object of the present invention to provide an improved cage for transporting live birds.

The cage according to the invention for the transport of live birds comprises a base engageable by the arms of a fork lift truck and, above the base, a box-like structure at least partly of mesh construction having side walls, end walls and top, wherein the top is constituted by an openable lid mounted at one side or end, characterised in that said openable lid is mounted on rising hinges.

Preferably, pivot pins for the lid are each mounted on a vertical leg which is itself mounted to be able to rise and fall relative to a fixed guide. The extent to which the pivot pins are able to rise and fall in this manner is preferably between 7 and 13 cm, most preferably about 10 cm (4 inches). The pivot pins on the vertical legs are preferably situated at two of the cage corners, most preferably at the opposite ends of one side of the cage.

The mounting of the lid in accordance with the invention, which enables its lowering in a manner creating minimum discomfort for the birds, constitutes an important advantage of the cage. Thus, when the lid is lowered, it descends on to the backs of the birds standing in the cage, and the lifting of the lid pivot pins enables the lid to assume a horizontal position about one half of a metre (18 inches) above the base, so that the weight of the lid is taken equally by all the standing birds and those nearer the lid pivot are not squashed. The weight of the lid causes the birds to sit, so that the lid drops to its fully closed and securable position, in which it is disposed about one third of a metre (14 inches) above the base.

Another preferred feature of the invention is that the cage has an openable end or side wall, preferably a side wall, the lid pivotting open about the top of the opposite non-openable side wall. The lid is most conveniently associated with a stay enabling the lid to be propped open.
The openable side wall preferably also opens pivotally, about its bottom edge, thereby to form a ramp.

The whole cage is thus easily accessible in the opened condition of the cage. More especially, the birds can be walked up the ramp and into the cage, and the side wall raised and the lid lowered when the cage has been fully loaded. In the case of a cage about 1.5 metres by 2.5 metres, about 25 large birds can be loaded.

The cage can be placed adjacent the birds' normal living quarters and opened, and straw laid up the ramp and on the base so that the birds can very easily be walked into the cage. The side wall can then be raised and secured, the lid lowered and secured, and the loaded cage lifted by a fork lift truck on to a lorry, where the cages can be stacked in the usual manner.

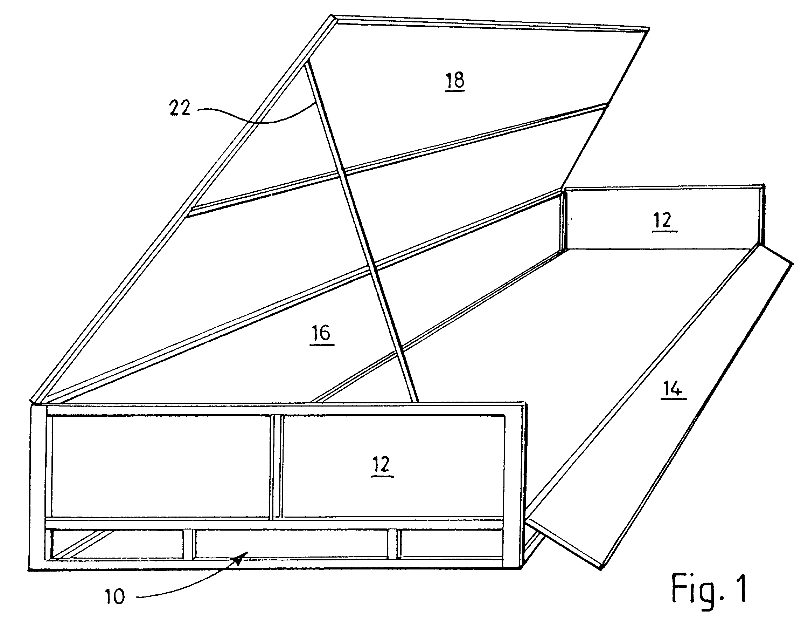

A bird cage in accordance with the invention is now described by way of example with reference to the accompanying drawings, in which:-
Figure 1 is a perspective view of the open cage;
Figure 2 is an end view of the cage; and
Figures 3 and 4 show details of the construction.

Referring to the drawings, the cage comprises a base 10 engageable by the arms of a fork lift truck, and above the base a structure of mesh construction, typically galvanised steel framing and galvanised steel mesh. The drawings show only the framing. The mesh structure has end walls 12, side walls 14 and 16, and a lid 18. At least either the lid or base of the cage may be of solid construction instead of mesh.

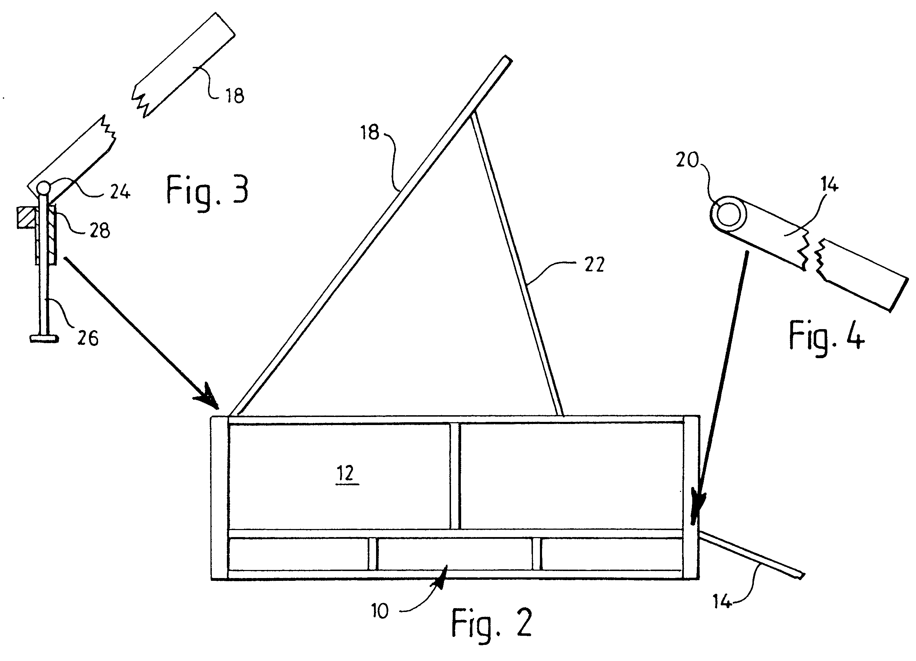

Side wall 14 constitutes an openable panel which pivots down about its bottom edge to form a ramp, as shown in the drawings. As indicated in Figure 4, the panel 14 pivots around a tubular rail 20 in order to provide a smooth transition from the ramp on to the base of the cage.

The lid 18 opens about the top of the opposite side wall 16, as also shown in the drawings. It can be propped in the open position by means of a stay 22 mounted to one end wall 12 of the cage.

As shown in Figure 3, the lid 18 turns about pivot pins 24 mounted at the top of legs 26 slidable up and down (to a limited extent) in vertical tubes 28 welded in position at the two back corners of the cage.

The ramp 14, together with the opened lid 18, enable live birds such as turkeys to be walked into the cage, as heretofore described. The rising lid pivot 24 enables the lid to be lowered in a manner which minimises discomfort for the birds as also heretofore described. Even if the birds cannot be walked into the cage for any reason, it will be appreciated that a handler can readily walk into the cage to place the birds in position.

The top of the base, which also constitutes the floor of the cage, may be of solid or mesh construction, and it will normally be lined with straw when birds are to be transported.

Typically, above the base 10, the cage structure will have dimensions of 1.5 metres (5 feet) by 2.5 metres (8 feet) by one third of a metre (14 inches) when closed, so that the loaded cages will readily and conveniently stack on the bed of a flat bed lorry in a conventional manner.

Unloading is equally easily and humanely practised by opening the side panel 14 and the lid 18 after the cage has been taken down from the lorry.

While reference has been made in the foregoing to the transport of caged turkeys, the cage is also suitable, with modified dimensions, for the transport of other live birds, such as chickens and ducks.

## Claims

1. A cage for the transport of live birds, comprising a base (10) engageable by the arms of a fork lift truck and, above the base (10), a box-like structure at least partly of mesh construction having side walls (14, 16), end walls (12) and top, wherein the top is constituted by an openable lid (18) mounted at one side or end, characterised in that said openable lid is mounted on rising hinges (26, 28).

2. A cage according to claim 1, wherein pivot pins (24) for the lid (18) are mounted on vertical legs (26) themselves mounted to rise and fall relative to fixed guides (28).

3. A cage according to claim 2, wherein the pivot pins (24) are able to rise and fall to an extent of 7 to 13 cm, preferably about 10 cm.

4. A cage according to claim 2 or claim 3, wherein the pivot pins (24) are mounted at corners of the cage at opposite ends of one side (16) thereof.

5. A cage according to any of claims 1 to 4, having an openable side wall (14) of the cage opposite the side (16) at which the lid pivots (24) are situated.

6. A cage according to claim 5, wherein the side wall (14) opens pivotally about its bottom edge (20) in order to form a ramp.

7. A cage according to any of claims 1 to 6, wherein the lid has an associated stay (22) enabling it to be propped open.

## Patentansprüche

1. Käfig für den Transport von lebenden Vögeln, mit einer Basis (10), die von den Armen eines Gabelstaplers aufgenommen werden kann, einer kastenförmigen Anordnung über der Basis (10) in zumindest teilweiser Maschenkonstruktion, mit Seitenwänden (14, 16), Endwänden (12) und einer Oberseite, wobei die Oberseite durch einen zu öffnenden Deckel (18) gebildet ist, der an einer Seite oder einem Ende befestigt ist,
dadurch gekennzeichnet, daß der zu öffnende Deckel an Hebegelenken (26, 28) befestigt ist.

2. Käfig nach Anspruch 1, dadurch gekennzeichnet, daß Schwenkzapfen (24) für den Deckel (18) an vertikalen Schenkeln (26) befestigt sind, die ihrerseits relativ zu den festen Führungen (28) heb- und senkbar befestigt sind.

3. Käfig nach Anspruch 2, dadurch gekennzeichnet, daß die Schwenkzapfen (24) bis zu einer Höhe von 7 - 13 cm, vorzugsweise etwa 10 cm, hebbar und senkbar sind.

4. Käfig nach Anspruch 2 oder 3, dadurch gekennzeichnet, daß die Schwenkzapfen (24) an Ecken des Käfigs auf entgegengesetzten Enden einer Seite (16) befestigt sind.

5. Käfig nach einem der Ansprüche 1 - 4, mit einer zu öffnenden Seitenwand (14) des Käfigs, die der Seite (16) gegenüberliegt, auf der die Deckelzapfen (24) angeordnet sind.

6. Käfig nach Anspruch 5, dadurch gekennzeichnet, daß die Seitenwand (14) sich schwenkbar um den Bodenrand (20) zur Ausbildung einer Rampe öffnet.

7. Käfig nach einem der Ansprüche 1 - 6, dadurch gekennzeichnet, daß der Deckel eine zugeordnete Stütze (22) aufweist, um den Deckel in der geöffneten Position zu stützen.

## Revendications

1. Cage pour le transport d'oiseaux vivants, comportant une base (10) pouvant être engagée par les bras d'un élévateur à fourche, et au-dessus de la base (10), une structure en forme de boîte au moins partiellement de construction grillagée possédant des parois latérales (14, 16), des parois terminales (12) et un dessus, le dessous étant constitué par un couvercle ouvrant (18), monté sur un côté ou une extrémité, caractérisée en ce que ledit couvercle ouvrant est monté sur des articulations mobiles en hauteur (26, 28).

2. Cage selon la revendication 1, dans laquelle des pivots (24) pour le couvercle (18) sont montés sur des branches verticales (26) elles-mêmes montées pour monter et descendre par rapport à des guides fixes (28).

3. Cage selon la revendication 2, dans laquelle les pivots (24) peuvent monter et descendre de 7 à 13 cm, de préférence d'environ 10 cm.

4. Cage selon la revendication 2 ou la revendication 3, dans laquelle les pivots (24) sont montés à des coins de la cage à des extrémités opposées d'un côté (16) de celle-ci.

5. Cage selon l'une quelconque des revendications 1 à 4, possédant une paroi latérale ouvrante (14) de la cage opposée au côté (16) sur lequel se trouvent les pivots (24) du couvercle.

6. Cage selon la revendication 5, dans laquelle la paroi latérale (14) s'ouvre par pivotement autour de son bord inférieur (20) afin de former un plan incliné.

7. Cage selon l'une quelconque des revendications 1 à 6, dans laquelle, au couvercle est associé un un étai (22) lui permettant d'être ouvert de manière soutenue.
